# EUROPEAN PATENT APPLICATION

(11) **EP 3 943 654 A2**
(43) Date of publication of application: **26.01.2022**
(21) Application number: 20773587.9
(22) Date of filing: 19.03.2020
(51) Int. Cl.: D04H 3/016, D04H 3/16, D01D 5/04, D01D 5/08

(54) **PRODUCTION METHOD FOR NANOFIBER AGGREGATES, PRODUCTION APPARATUS FOR NANOFIBER AGGREGATES, AND NANOFIBER AGGREGATES**

(30) Priority: 19.03.2019 JP 2019051961
(71) Applicant: M-Techx Inc., Chuo-ku Tokyo 104-0033 (JP)
(72) Inventor: SOTA, Hiroyoshi, Tokyo 140-0033 (JP)
(74) Representative: Plougmann Vingtoft a/s
(86) International application number: PCT/JP2020/012549
(87) International publication number: WO 2020/189791

(57) **Abstract**

[PROBLEM] To provide a production method for nanofiber aggregates having high oil adsorption capacity and oil keeping capacity, a production apparatus for the nanofiber aggregates, and nanofiber aggregates having high oil absorption capacity.

[SOLUTION] The present invention pertains to a production method and production apparatus for nanofiber aggregates produced and stretched into a fine-diameter fibrous shape by spraying a high-temperature, high-pressure gas from gas discharge ports into a polymer solution discharged from a solution discharge port. The nanofiber aggregates are collected into fine-diameter fibers in a high-temperature, high-pressure gas wind force by discharging secondary high-pressure air from high-pressure air blowing discharge ports in an intersecting pattern into a nanofiber flow during production and stretching. Further provided, as an effect, are nanofiber aggregates: having the characteristic that the distribution of fiber diameters thicker than the central fiber diameter and the distribution of fiber diameters thinner than the central fiber diameter are equal or better; and having excellent oil absorption capacity and oil keeping capacity.

## Description

### Technical Field

The present invention relates to a method for producing a nanofiber aggregate suitable for collecting waste oil from a tanker or the like and waste oil such as used waste oil in a restaurant or the like, a production apparatus thereof, and a nanofiber aggregate thereof. In particular, the present invention a method for producing a nanofiber aggregate collected as a nanofiber aggregate by discharging high-temperature, high-pressure gas from the gas discharge port to the heated polymer melt liquid discharged from the solution discharge port or the polymer solution dissolved in the solvent (hereinafter, also referred to as "raw material solution") and stretching the raw material solution into fine-diameter fiber, an production apparatus thereof, and a nanofiber aggregate produced by the method for producing the nanofiber aggregate.

In the present description, each term is used as the meaning as follows.

In the first place, "nano" is a physical unit of weights and measures and shown as 1n = 10⁻⁹ and 1000 nm or more is a micrometer (µm) region, so it is not correct to use fibers with a wire diameter of 1000 nm as nanofibers. However, in the present description, even if a fine finer has the central fiber diameter of several thousand nm, a fiber containing a large amount of ultrafine fiber having a nanometer unit of several tens to several hundreds nm is used as the term "nanofiber".

Therefore, in the present invention, the fiber diameter of a fine fiber group obtained by discharging a high-temperature, high-pressure gas from the gas discharge port to the heated polymer melt liquid discharged from the solution discharge port or the polymer solution dissolved in the solvent and stretching it into fine-diameter fiber ranges from several tens of nm to several thousand nm. Therefore, the term "nanofiber" is used even when the central fiber diameter is 1000 nm to 2500 nm. In the present invention, for example, nanofibers having a central fiber diameter of 1500 nm and "nanofibers" whose numerical values are quantitatively limited are used.

In the present description, the term "nanofiber aggregate" means an aggregate obtained by discharging high-temperature, high-pressure gas from a gas discharge port to a heated polymer melt liquid discharged from a solution discharge port or a polymer solution dissolved in a solvent and collecting fine-diameter fibers generated and stretched from a fibrous flow (hereinafter, this fiber flow is referred to as a nanofiber flow).

In the present description, the term "generating / stretching or generated / stretched" of nanofibers is used as a meaning that a liquid solution (raw material solution) discharged from a solution discharge port is in a state linearly generated from a solution state with the wind power of the high-temperature, high-pressure gas by blowing off the liquid solution with the discharged high-temperature, high-pressure gas and generated as nanofiber fine diameter fibers by further stretching it into the fine diameter fiber by with the high-temperature, high-pressure gas. As the high-temperature, high-pressure gas spreads in the space as it moves away from the discharge port, the force to stretch decreases as it moves away from the discharge port, and the temperature also drops, so that the stretching action of reducing the diameter disappears. The state affected by the stretching action of this reduction in diameter is used to refer to the state "generating / stretching or generated / stretched" of nanofibers.

In the present description, "three-dimensional stirring" means an operation to three-dimensionally stir nanofiber in a three-dimensional direction by discharging the secondary high-pressure air to the generated and stretched nanofiber flow discharged from the nanofiber discharge device comprising the high-temperature, high-pressure gas discharge port and the discharge port of the raw material solution. This causes to suppress the stretching of the fibers during stretching and increase the production of nanofibers having a fiber diameter larger than the central fiber diameter of the nanofiber aggregate, at the same time to generate the turbulence in the nanofiber flow.

In the present description, the "central fiber diameter" of a nanofiber aggregate means a fiber diameter of the fiber that is centrally distributed in the quantity distribution of fiber diameters of the collected nanofiber aggregates and refers to the fiber diameter that is most abundant in that nanofiber aggregate. The "central fiber diameter" of the generated nanofiber aggregates can be adjusted by conditions such as the temperature of the raw material solution, discharge volume, discharge rate and gas temperature and pressure.

In the present description, the term "solution" or "raw material solution" is used to mean both the heated molten polymer melt solution discharged from the solution discharge port in the melt-blow method and the polymer solution dissolved in the solvent in the dry discharge method.

In the present description, the term "oil adsorption capacity (OAR: Oil Adsorption Ratio)" means the ability of nanofiber aggregates to adsorb oil such as waste oil, and the unit is expressed as a ratio of g/g. The measurement of the oil adsorption capacity (OAR) is based on the following procedure according to the "Performance Test Standards for Oil Discharge Prevention Materials" in Non-Patent Document 1.
(i) Measure the self-weight m (g) of the target nanofiber aggregate of a given size.
(ii) Immerse the whole of the target nanofiber aggregate in oil of viscosity grade ISO VG 22 as specified in JIS at 20°C for 5 minutes.

Although the standards of the Ministry of Land, Infrastructure, Transport and Tourism (MLIT) stipulate that the test should be conducted using B heavy oil, B heavy oil is not suitable as a test oil for production control due to its high variability in viscosity, and ISO VG 22 specified by JIS, which is equivalent to B heavy oil in viscosity, should be used.
(iii) Leave the target (i) on a metal net made of 1 mm diameter wire woven into a mesh with a sieve mesh of 17 mm for 5 minutes, and then measure the total weight M (g) of the target accumulation after oil absorption.
(iv) Oil adsorption capacity (OAR) is defined as OAR = M/m.

In the present description, the term "Oil Keeping Capacity (OKR: Oil Keeping Ratio)" means the ability to retain oil such as waste oil absorbed by the nanofiber aggregate, and the unit is expressed as a ratio of g/g.

The measurement of the oil keeping capacity (OKR) after oil absorption is based on the following measurement method according to the "Performance Test Standards for Oil Discharge Prevention Materials" in Non-Patent Document 1.
(i) Measure the self-weight m (g) of the target nanofiber aggregate of a given size.
(ii) Immerse the whole of the target nanofiber aggregate in oil of viscosity grade ISO VG 22 as specified by JIS at 20°C for 5 minutes.

Although the standards of the Ministry of Land, Infrastructure, Transport and Tourism (MLIT) stipulate that the test should be conducted using B heavy oil, B heavy oil is not suitable as a test oil for production control due to its high variability in viscosity, and ISO VG 22 specified by JIS, which is equivalent to B heavy oil in viscosity, should be used.
(iii) Leave the target (ii) on a metal net made of 1 mm diameter wire woven into a mesh with a sieve mesh of 17 mm for 30 minutes, and then measure the total weight M'(g) of the target nanofiber aggregate.
(iv) The oil keeping capacity (OKR) is defined as OKR = M'/m.

In the present description, the term "bulk density ρ" is the self-weight m (g) of the nanofiber aggregate of the target unit size, and the "bulk density" is described as ρ =m/V (g/cm³), which the volume of the nanofiber aggregate is V (cm³).

### Technical Background

As shown in Patent document 1 (JPH07-275293), a technique for generating and stretching a non-woven web of nearly continuous fine fibers is known.

Patent document 1 discloses a technique for providing a liquid distribution layer for absorbent articles that exhibits directional liquid distribution and has a desirable physical integrity. The liquid distribution layer is a non-woven web of nearly continuous fine fibers aligned approximately along one flat surface of the web. The fibers are modified to be hydrophilic or are hydrophilic. In addition, the liquid distribution layer has an increasing fiber alignment gradient as well as a decreasing fiber thickness gradient in the thickness direction of the web. Furthermore, a suitable process for producing the liquid distribution layer is provided.

Furthermore, Patent Document 2 (JP2013-184095) discloses that an oil adsorbent having excellent oil adsorption capacity and being safe is provided. Patent Document 2 discloses a nanofiber laminates comprising a polypropylene fiber diameter of 100-500 nm. Patent Document 2 also discloses an oil adsorbent obtained, a production method and a production apparatus, which is obtained by melting polypropylene with high temperature heat, pressurized and spun the melted polypropylene through a spinning nozzle, blowing the high-speed, high-temperature air current in a direction intersecting the propylene fibers to stretch the spun polypropylene fibers and collecting and laminating the blown polypropylene fiber.

Thus, Patent Document 2 discloses a method of collecting nanofiber laminates by blowing them into a collection device (net) as a production method and a production apparatus. However, Patent Document 2 does not mention the stacking state of the nanofiber laminates obtained by the method or other favorable indicators of the nanofiber laminates.

In such a nanofiber aggregate production apparatus, a production method or a production apparatus is generally known to blow off the liquid solution discharged from the solution discharge port by the high-temperature, high-pressure gas discharged from the high-temperature, high-pressure gas discharge port, to generate the fibers from the solution state by the wind force of the high-temperature, high-pressure gas, to generate and stretch the fine-diameter fibers and to collect them by a collector. However, since it is easy to accumulate the nanofibers in the vicinity of the central extension line of the high-temperature, high-pressure gas discharge port, it is difficult to collect them with a uniform thickness over the peripheral part. Therefore, there is a problem that when it is used for commercial purposes, the nanofiber aggregate is processed into a sheet, and when it is desired to be an oil adsorbent having high oil adsorption capacity, for example, a plurality of the sheet-like nanofiber aggregates are laminated and processed such as crimping so that each sheet-like nanofiber does not come off.

### Prior Art Document

### Patent Document

Patent Document 1: JPH07-275293 A
Patent Document 2: JP2013-184095 A

### Non-Patent Document

Non-Patent Document 1: "Performance Test Standards for Oil Discharge Prevention Materials" (Ministry of Transport, Director-General of the Bureau of Shipping, February 1, 1984, Ship Survey No. 52)

### Summary of Invention

### Problem to be solved by the invention

Nanofiber aggregates have been used as oil adsorbent, sound absorber/sound proofer, heat insulator/thermal insulator, filter material, etc., and their applications are known to those skilled in the art. When nanofiber aggregates are used for waste oil treatment, it is desirable to have a high oil adsorption capacity (OAR). The oil adsorption capacity (OAR) is simply the total weight (g) of oil that can be adsorbed per unit weight (1 g) of the nanofiber aggregate. The higher the oil adsorption capacity (OAR), the more oil can be absorbed, thus the higher the oil adsorption capacity (OAR) is required. However, the oil adsorption capacity (OAR) is not the only thing that needs to be high for nanofiber aggregates used in waste oil treatment. In particular, for nanofiber assemblies used in marine pollution and waste oil treatment, the oil keeping capacity (OKR) is also required to retain the adsorbed oil for a predetermined period of time during recovery.

In the production method of nanofiber aggregates, which is generally called the dry discharge method or melt blow method, the raw material solution is discharged from the nanofiber discharge device comprising a solution discharge port for discharging the raw material solution and a gas discharge port for discharging high-temperature, high-pressure gas. Then, the nanofiber fibers generated and stretched as a linear fiber flow (this fiber flow is referred to the nanofiber flow) are accumulated and collected by the collector. Since the discharged nanofiber fibers tend to accumulate near the center of the extension line of the discharge direction of the high-temperature, high-pressure gas port, it is difficult to collect them in almost uniform thickness from the center to the periphery. For this reason, as already mentioned, a processing treatment such as lamination and crimping of multiple sheets of the accumulation collected by the collector is required to process the nanofiber aggregate into a sheet form and to further increase the oil adsorption capacity when the nanofiber accumulation is to be used for commercial purposes.

The present invention solves the above problems by providing a method for producing nanofiber aggregates, an apparatus for producing nanofiber aggregates, and nanofiber aggregates with high oil adsorption capacity, which have excellent oil adsorption capacity (OAR) and oil keeping capacity (OKR) and do not need to be processed into sheet form in a subsequent process.

### Means for solving the problem

A method of the present invention for producing a nanofiber aggregate comprises generating and stretching a raw material solution with a nanofiber discharge device to obtain nanofibers, and collecting the nanofibers by a collector. The nanofiber discharge device comprises a solution discharge port to discharge the raw material solution, and a high-temperature, high-pressure gas discharge port to discharge high-temperature, high-pressure gas. The discharge high-temperature, high-pressure gas discharged from discharge high-temperature, high-pressure gas port is blown to the raw material discharged from the solution discharge port.

The method comprises discharging secondary high-pressure air from an air blow discharge port to a generated and stretched nanofiber discharge flow discharged from the nanofiber discharge device to obtain the nanofibers, and accumulating and collecting the nanofibers by the collector. The air blow discharge port to additionally discharge high-pressure gas is located between the nanofiber discharge device and the collector.

The method of the present invention for producing a nanofiber aggregate further comprises discharging the secondary high-pressure air to the generated and stretched nanofiber discharge flow discharged from the nanofiber discharge device so as to increase the generation of nanofibers with a diameter larger than the central fiber diameter by generating turbulence in the nanofiber discharge flow, stirring the nanofiber fibers at the same time, and accumulating and collecting the obtained nanofibers in the collector.

An apparatus of the present invention for producing a nanofiber aggregate comprises a nanofiber discharge device having a solution discharge port to discharge a raw material solution and a high-temperature, high-pressure gas discharge port to discharge high-temperature, high-pressure gas, and a collector to collect nanofibers obtained by generating and stretching the raw material solution discharged from the solution discharge port by the high-temperature, high-pressure gas discharged from the high-temperature, high-pressure gas port.

The apparatus comprises an air blow discharge port to additionally discharge high-pressure gas between the nanofiber discharge device and the collector. The nanofibers are obtained by discharging secondary high-pressure air from the air blow discharge port to a generated and stretched nanofiber discharge flow being discharged from the nanofiber discharge device. The obtained nanofibers are accumulated and collected in the collector.

Further, the apparatus of the present invention for producing the nanofiber aggregate performs that the secondary high-pressure air is discharged to the generated and stretched nanofiber discharge flow discharged from the nanofiber discharge device so as to increase the generation of nanofibers with a diameter larger than the central fiber diameter by generating turbulence in the nanofiber discharge flow, that the nanofibers are stirred at the same time, and that the obtained nanofibers are accumulated and collected in the collector.

A nanofiber aggregate of the present invention has the following elements:
(1) the central fiber diameter d is 1000 ≤ d ≤ 2500 (unit: nm),
(2) "Bulk density" ρ is ρ ≤ 0.020 (unit: g/cm³),
(3) oil adsorption capacity, OAR, is OAR ≥ 40 (unit: times),
(4) oil adsorption and keeping capacity, OKR, is OKR ≥ 40 (unit: times), and
(5) the amount of fiber distribution with a diameter larger than the central fiber diameter d of the nanofiber aggregate is larger than the amount of fiber distribution with a diameter smaller than the central fiber diameter d.

### Effects of Invention

When a nanofiber flow is discharged, generated, and stretched by a nanofiber discharge device comprising a solution discharge port for discharging a raw material solution and a high-temperature, high-pressure gas discharge port for discharging a high-temperature, high-pressure gas, the fiber diameter is not uniformly distributed. Nanofiber aggregates with the desired central fiber diameter are generated under the necessary conditions such as the temperature, discharge volume, and discharge speed of the raw material solution and the temperature and pressure of the gas. The function of nanofiber generation and stretching is complex, and as mentioned above, the discharged nanofiber flow is not a uniform diameter fiber, but includes fibers thinner than the desired central fiber diameter and fibers thicker than the desired central fiber diameter. However, it has been found by the invention of this application that this mixture of fibers having desired central fiber diameter with a diameter thinner than the desired central fiber diameter and fibers with a diameter thicker than the desired central fiber diameter is related to the oil adsorption capacity (OAR) and oil adsorption capacity (OKR).

In other words, when secondary high-pressure air is blown from the air blow discharge port to the nanofiber flow generated and stretched under the necessary conditions such as the temperature, discharge volume and discharge speed of the raw material solution and the temperature and pressure of the gas to generate nanofibers with the desired central fiber diameter, the wind force of the high-temperature, high-pressure gas suppresses the stretching action that causes the fibers to become longer and thinner so as to increase the fibers having the diameter that are thicker than the desired central fiber diameter. At the same time, it disrupts the nanofiber flow during generating and stretching, effects to three-dimensionally entangle the nanofiber fibers, and improves the oil adsorption capacity (OAR) and oil keeping capacity (OKR). In particular, when the temperature of the high-pressure air from the air blow discharge port is lower than the temperature of the high-temperature, high-pressure gas, the stretching of the nanofiber fibers during generation and stretching will be greater, and the effect of increasing the diameter of the thicker fibers will be greater. The secondary high-pressure air from the air blow discharge port should be relatively low and close to room temperature.

Furthermore, if multiple air blow discharge ports for discharging secondary high-pressure air are provided, in addition to the above effects of increasing the amount of fibers with a diameter larger than the desired central fiber diameter and improving the oil adsorption capacity (OAR) and oil keeping capacity (OKR), it has effects of increasing the strength of the nanofiber aggregate, improving the shape retention of the aggregate collected by the collector and forming a wide variety of shapes of the aggregates. In the conventional technology, the nanofibers are accumulated in a circular shape around the extension of the high-temperature, high-pressure gas port, and the nanofiber aggregate must be processed into a sheet shape in a subsequent process. However, in the present invention, the amount of fibers with a diameter larger than the central fiber diameter is increased by multiple air blow discharges to improve the oil adsorption capacity (OAR) and oil keeping capacity (OKR). In addition, the present invention has the effect of obtaining sheet-like nanofiber aggregates with the desired shape by controlling the airflow rate and direction.

### Brief Description of Drawings

Fig. 1 is a conceptual diagram of the production method for the nanofiber aggregates of the present invention.
Fig.2 is a diagram of the nanofiber discharge device and secondary air blow discharge port assembly device in the production apparatus for the nanofiber aggregate.
Fig. 3 is a front view of the nanofiber discharge device and the secondary air blow discharge port assembly device in the apparatus for producing nanofiber aggregates, viewed from the nanofiber collector side.
Fig. 4 is overall view of the nanofiber generating and collecting part of the apparatus for producing nanofiber aggregates of the present invention.
Fig. 5 is a diagram illustrating the details of the nanofiber collection part of the apparatus for producing nanofiber aggregates.
Fig. 6 is an external view of the nanofiber aggregate (nanofiber sheet) of the present invention.
Fig. 7 is a conceptual diagram of another example of the apparatus for producing nanofiber aggregates of the present invention.
Fig. 8 is an example of the external shape of a nanofiber aggregate that can be produced using the method and apparatus for producing nanofiber aggregates of the present invention.
Fig. 9 is a fiber diameter distribution diagram comparing nanofiber aggregates produced by the apparatus for producing the nanofiber aggregates of the present invention with the high-pressure air blow stopped and with the high-pressure air blow running (SEM data).
Fig. 10 is a measured data of "bulk density" of the nanofiber aggregates of the present invention.
Fig. 11 is a measured data of OAR and OKR of the nanofiber aggregates of the present invention.
Fig. 12 is a schematic of a conventional method for producing nanofiber aggregates.
Fig. 13 is a schematic illustration of an example of a conventional apparatus for producing nanofiber aggregates (melt blow method).
Fig. 14 is an external view of a nanofiber aggregate produced with a conventional apparatus for producing nanofiber aggregates.

### Description of Embodiment

In the followings, the method for producing the nanofiber aggregates, the apparatus for producing the nanofiber aggregates, and the nanofiber aggregates of the present invention will be described in more detail using the drawings. However, the following description using the drawings is only an explanation of one example of the present invention, and the present invention is not limited by that example, and changes that can be easily made by those skilled in the art are comprised in the present invention as long as they do not contradict the technical inventive concept of the present invention.

The method for producing the nanofiber aggregate of the present invention is to use a nanofiber discharge device comprising a solution discharge port and a high-temperature, high-pressure gas discharge port to blow off the raw material solution discharged from the solution discharge port by the high-pressure gas discharged from the high-temperature, high-pressure gas discharge port to form a nanofiber flow, and to accumulate and collect the nanofibers obtained by generating and stretching the nanofibers by the nanofiber collector. The method for producing the nanofiber aggregate of the present invention is to discharge the secondary high-pressure are from the air blow discharge port to the generated and stretched nanofiber flow discharged by the nanofiber discharge device by locating the air blow discharge port between the nanofiber discharge device and the nanofiber collector.

The method for producing the nanofiber aggregate comprises a plurality of air blow discharge ports.

Furthermore, the method for producing the nanofiber aggregate comprises an angle changing means for adjusting the angle of the discharge direction of the high-pressure air discharged from at least one of the plurality of the air blow discharge ports with respect to the axial direction of the high-temperature, high-pressure gas discharge port of the nanofiber discharge device.

Furthermore, the method for producing the nanofiber aggregate comprises a means for changing the airflow rate to adjust the airflow rate of the high-pressure air discharged from at least one of the plurality of air blow discharge ports.

Furthermore, the production method of the nanofiber aggregate arranges the plurality of the air blow discharge ports in a circumferential pattern around the generated and stretched nanofiber flow discharged from the nanofiber discharge device.

Furthermore, the method for producing the nanofiber aggregate comprises an air blow control means for controlling the air blowing operation of the circumferentially arranged air blow discharge ports in a continuous clockwise or counterclockwise sequence.

The apparatus for producing nanofibers of the present invention comprises a nanofiber discharge device having a solution discharge port for discharging a raw material solution and a high-temperature, high-pressure gas discharge port for discharging a high-temperature, high-pressure gas, and a collector to accumulate and collect the nanofibers obtained by blowing off the raw solution material discharged from the solution discharge port by the high temperature, high-pressure gas discharged from the high-temperature, high-pressure gas port to form the nanofiber flow and then generating and stretching the raw material.

The apparatus for producing the nanofibers of the present invention comprises an air blow discharge port to additionally discharge high-pressure gas between the nanofiber discharge device and the collector. The apparatus for producing the nanofibers of the present invention discharges secondary high-pressure air from the air blow discharge port to the generated and stretched nanofiber flow discharged from the nanofiber discharge device and obtains the nanofibers by accumulating and collecting in the collector.

The apparatus for producing the nanofibers of the present invention also comprises a plurality of air blow discharge ports.

Furthermore, the apparatus for producing the nanofibers of the present invention comprises an angle changing means for adjusting the angle of the discharge direction of the high-pressure air discharged from at least one of the plurality of air blow discharge ports with respect to the axial direction of the high-temperature, high-pressure gas discharge port of the nanofiber discharge device.

In addition, the apparatus for producing the nanofibers of the present invention comprises a means for changing the airflow rate to adjust the airflow rate of the high-pressure air discharged from at least one of the plurality of air blow discharge ports.

Furthermore, the apparatus for producing the nanofibers of the present invention arranges plurality of air blow discharge ports in a circumferential pattern around the nanofiber flow being stretched that is discharged from the nanofiber discharge device.

Furthermore, the apparatus for producing the nanofibers of the present invention arranges the plurality of air blow discharge ports in concentric circles with respect to the nanofiber flow discharged from the nanofiber discharge device.

Furthermore, the apparatus for producing the nanofibers of the present invention comprises an air blowing control means to control the air blowing operation of the circumferentially arranged air blow discharge ports in a continuous clockwise or counterclockwise sequence.

The nanofiber aggregate of the present invention has the following elements:
(1) the central fiber diameter d is 1000 ≤ d ≤ 2500 (unit: nm),
(2) "bulk density" ρ is ρ ≤ 0.020 (unit: g/cm³),
(3) oil adsorption capacity OAR is OAR ≥ 40 (unit: times),
(4) oil adsorption keeping capacity OKR is OKR ≥ 40 (unit: times), and
(5) the amount of fiber distribution with a diameter larger than the central fiber diameter d of the nanofiber aggregate is larger than the amount of fiber distribution with a diameter smaller than the central fiber diameter d.

Furthermore, a raw material of the nanofiber aggregate is polypropylene.

The following will be explained with further reference to the drawings. In the present invention, high-pressure air is discharged from an air blow discharge port located downstream of the nanofiber discharge device to the generated and stretched nanofiber flow discharged from the nanofiber discharge device comprising a raw material solution port and a high-temperature, high-pressure gas port so as to suppress the stretching action of reduction in diameter of the generated and stretched nanofiber fibers. At the same time, the nanofiber fibers are intertwined in the process of reaching the collector by three-dimensionally stirring the nanofiber flow and are collected on the collecting surface of the collector. This raises the porosity and collects the nanofiber aggregates with low bulk density into a predetermined shape such as a sheet, mat, or block. This is a solution to the problem.

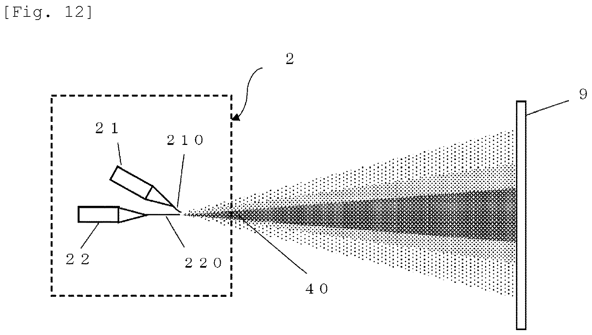

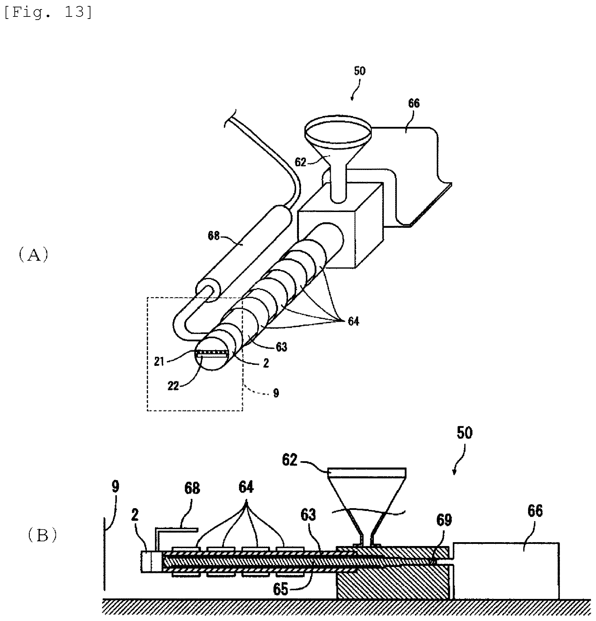

The present invention can be applied to both the dry spinning method (using dissolved liquid) and the melt blow method (using molten raw materials). The melt blow method will be described below as a representative example. Generally speaking, the production of nanofibers, called the melt-blow method, is carried out in the manner shown in the conceptual diagram in Fig. 12. A high-temperature, high-pressure gas 220 is discharged from the high-temperature, high-pressure gas port 22 into the molten polymer solution 210 discharged from the raw material solution port 21 (The device combining the raw material solution discharge port 21 and the high-temperature, high-pressure gas discharge port 22 is called the nanofiber discharge device 2), and the raw polymer is discharged from the droplet state into the nanofiber flow 40. Then, the nanofibers are produced by accumulating and collecting with the collector 9 through the nanofiber generating and stretching region. An example of a producing device embodying the conceptual diagram in Fig. 12 is shown in Fig. 13.

Fig. 13(A) is a diagram of a specific example of a device for producing nanofiber aggregates, and Fig. 13(B) is a side cross-sectional view of the device in Fig. 13(A). The device 50 for producing the nanofiber aggregates comprises a hopper 62, a heating cylinder 63, a heating heater 64, a screw 65, a motor 66, and a nanofiber discharge device 2.

Synthetic resin in pellet form, which is the raw material for nanofiber generation, is fed into the hopper 62. It is heated by a heating cylinder 63 and a heating heater 64 to melt the resin fed from the hopper 62. A screw 65 is spaced in the heating cylinder 63. The screw 65 is rotated by the motor 66 to send the molten resin to the end of the heating cylinder 63. A high-pressure gas supply unit (not shown in this figure) is connected to the cylindrical nanofiber dispenser 2, which houses the resin port 21 and the high-temperature, high-pressure gas port 22, via a gas supply pipe 68. The gas supply pipe 68 comprises a heater, which heats the high-pressure gas supplied from the gas supply pipe to a high temperature. The nanofiber discharge device 2 discharges molten resin to ride on the high-temperature, high-pressure gas flow, i.e., it discharges a nanofiber flow. Naturally, such a configuration for melting the resin is not necessary in the dry spinning method that uses a dissolving solution as the discharge material. A collector 9 is disposed in front of the nanofiber discharge device 2, and the nanofibers are accumulated and collected by this collector 9.

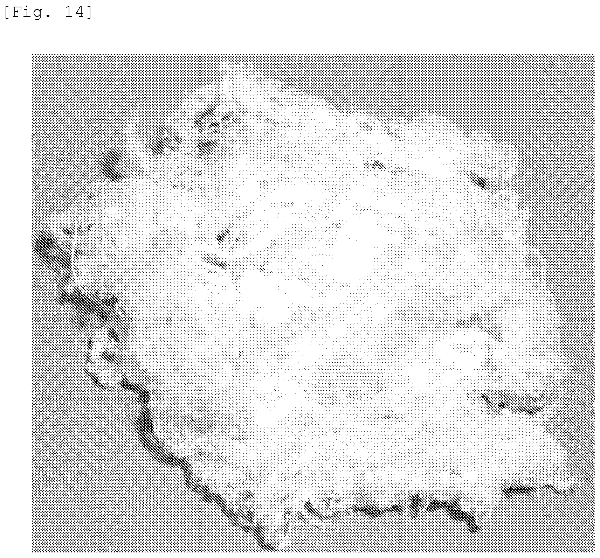

Since the nanofiber aggregate produced by this process is cottony as shown in Fig. 14 and has a shape with a large amount of accumulation in the center of the nanofiber flow 40 shown in Fig. 12, the nanofiber aggregate is stretched into a sheet shape in a later process, and multiple sheets of the sheet are stacked together for generally using as a nanofiber laminate.

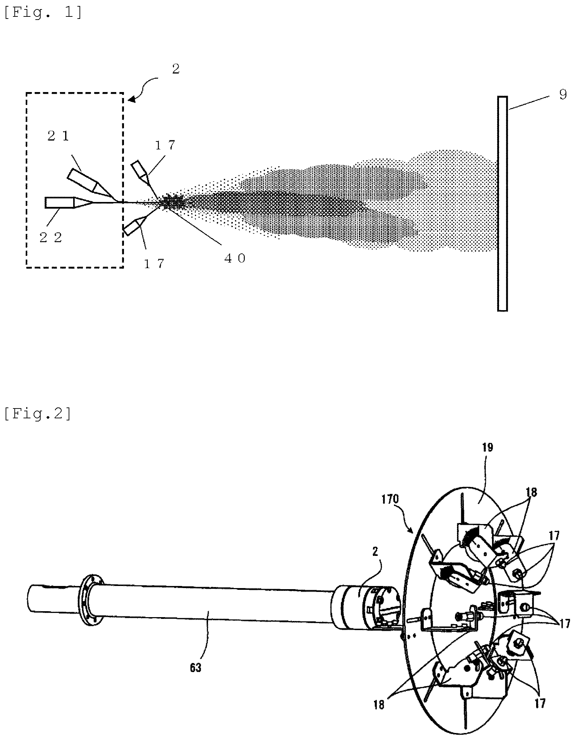

The conceptual diagram of the method for producing the nanofiber aggregates is shown in Fig. 1. In the process of generating and stretching nanofibers, the conceptual diagram is the same for both the melt blowing method and the dry spinning method. The nanofiber discharging device 2 discharges and stretches the raw material solution as a nanofiber flow 40 by discharging high-temperature, high-pressure gas from the high-temperature, high-pressure gas port 22 into the melted or dissolved polymer resin material (raw material solution) discharged from the raw material solution port 21 to generate nanofibers. Although this conceptual diagram appears to be similar to that of Fig. 12 in the conventional example, the invention of the present application has a feature that the stretching action of the stretched nanofiber fibers of the generated and stretched nanofiber flow discharged from the nanofiber discharge device 2 are inhibited, and that the air blow discharge port 17 to secondary discharge the high-pressure air is comprised to three-dimensionally stir the nanofiber fibers by disturbing the nanofiber flow at the same time. In this way, when high-pressure air is discharged from the air blow discharge port 17 to cross the nanofiber flow 40 discharged and flowing from the nanofiber discharge device 2, the nanofiber flow is disturbed and the stretching action of the nanofiber fibers being generated and stretched is suppressed, and at the same time, the nanofiber flow is agitated three-dimensionally, and the fibers can be entangled in a complex manner. Furthermore, the air blow discharge port 17 is equipped with a plurality of air blow discharge ports around the nanofiber flow, and all or a part of the nanofiber flow from these air blow discharge ports is individually controlled and collected, with the aim of being able to form and collect the nanofiber sheet of the desired shape in the collection device 9.

Figs. 2 through 5 are examples of a production apparatus that embody the conceptual diagram of the method for producing the nanofiber aggregate shown in Fig. 1, showing the relationship between the nanofiber discharge device 2, air blow discharge port 17 and collector 9.

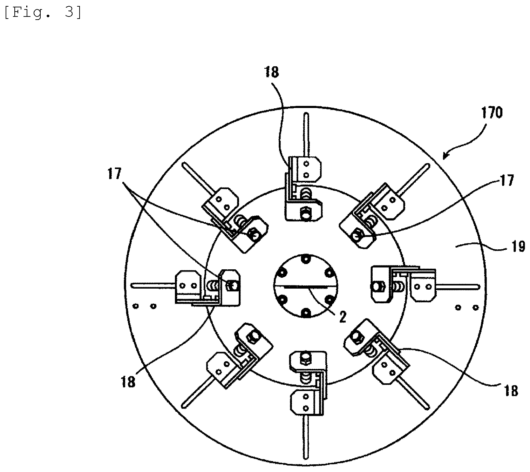

Fig. 2 shows a diagram of the arrangement of the nanofiber discharge device 2 and the air blow discharge port 17. Fig. 3 is a view of the nanofiber discharge device 2 from the front side of the diagram in Fig. 2, where the air blow discharge port 17 is installed (right side of Fig. 2). As can be seen from Figs. 2 and 3, a plurality of air blow discharge ports 17 are arranged to surround the discharge port of the nanofiber discharge device 2. Although the nanofiber flow 40 is not shown in this figure, the air blow discharge ports 17 are arranged in a way that they surround the nanofiber flow 40 discharged from the nanofiber discharge device 2. The air blow discharge port 17 is attached and fixed to the holding frame 19, and the air discharge angle of the air blow discharge port 17 is configured to adjust the angle with respect to the axis direction of the high-temperature, high-pressure gas port 22 by the angle adjustment plate (air blow angle changing means of the air discharge port) 18. The plurality of air blow discharge ports 17 and the angle adjustment plate 18 of each air blow discharge ports 17 in Fig. 3 are integrally sub-assembled by a holding frame 19, and will be referred to as the sub-assembled air blow discharge port assembly device 170.

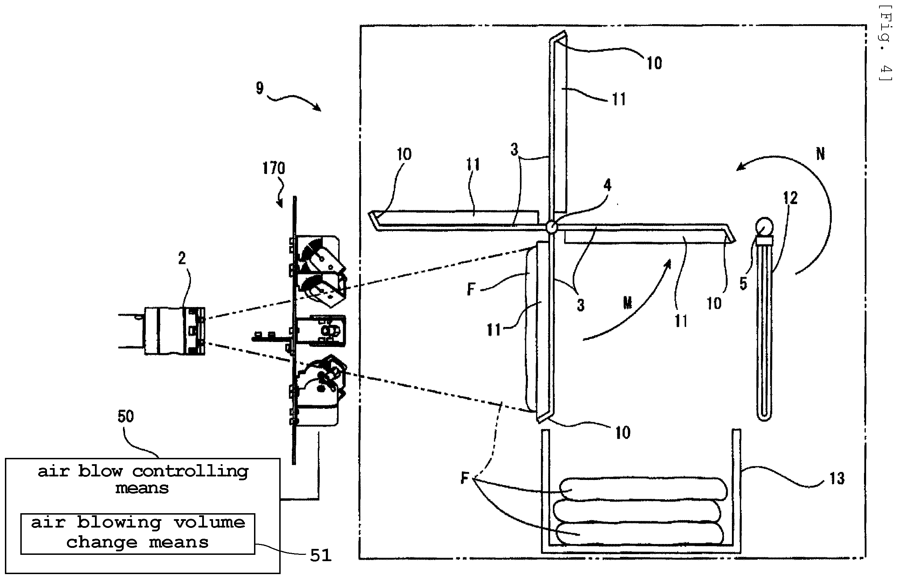

Fig. 4 shows an example of an apparatus for producing nanofiber aggregates that embodies the conceptual diagram of the method for producing nanofiber aggregates of the present invention presented in Fig. 1. Fig. 4 shows the relative positions of the nanofiber discharge device 2, the air blow discharge port assembly device 170 and the collection device 9. The size of each device and the distance between the devices are shown differently from the actual size to make the entire device easier to understand.

The nanofiber flow 40 discharged from the nanofiber discharge device 2 in Fig. 4 flows through the central space of the air blow discharge port assembly device 170. When high-pressure air is discharged from the multiple air blow discharge ports 17 built into the air blow discharge port assembly device 170 and intersects the nanofiber flow 40 being generated and stretched, the stretching action on the nanofiber fibers being generated and stretched is suppressed. At the same time, the nanofiber fibers are three-dimensionally entangled by disturbing the nanofiber flow and accumulated and collected by the collector 9.

In particular, if the temperature of the high-pressure air discharged from the air blow discharge port 17 is lower than the temperature of the high-temperature, high-pressure gas 220 discharged from the high-temperature, high-pressure gas port 22 in the nanofiber discharge device 2, the stretching action of the nanofiber fibers being generated and stretched will stop when the high-pressure air crosses. Therefore, the effect of increasing the amount of fibers with a diameter thicker than the central fiber diameter can be expected. The temperature of the high-pressure air discharged from the air blow discharge port 17 should be set relatively low and should be close to room temperature.

The collector shown in Fig. 4 comprises a rotating shaft 4 of the collecting means, a rotating shaft 5 of the scraping means, a collecting means drive motor that rotates and drives the rotating shaft 4 of the collecting means and a scraping means drive motor (not shown) that rotates and drives the rotating shaft 5 of the scraping means. The rotating shaft 4 of the collecting means is stopped after every 90° rotation and comprises a rotation control means (not shown) to rotate the rotating shaft 5 of scraping means by 360° immediately after the rotating shaft 4 of the collecting means is stopped. The nanofiber flow 40 discharged from the nanofiber discharge device 2 passes through the air blow discharge port assembly device 170, and is three-dimensionally agitated by high-pressure air discharged from a plurality of air blow discharge ports 17 attached to the air blow discharge port assembly device 170. The nanofiber flow 40 is then accumulated and collected by the collection means 3, which is stopped in the lower position. The nanofiber aggregate F accumulated and collected by the collecting means 3 is scraped off by the U-shaped scraping rod 12 attached to the rotating shaft 5 of the scraping means as the collecting means 3 rotates 45° in the M direction and the rotating shaft 5 of the scraping means rotates in the N direction. As already mentioned above, the collecting means drive motor, scraping means drive motor and rotation control means are not essential to the essence of the present invention, so they are not shown in the figure.

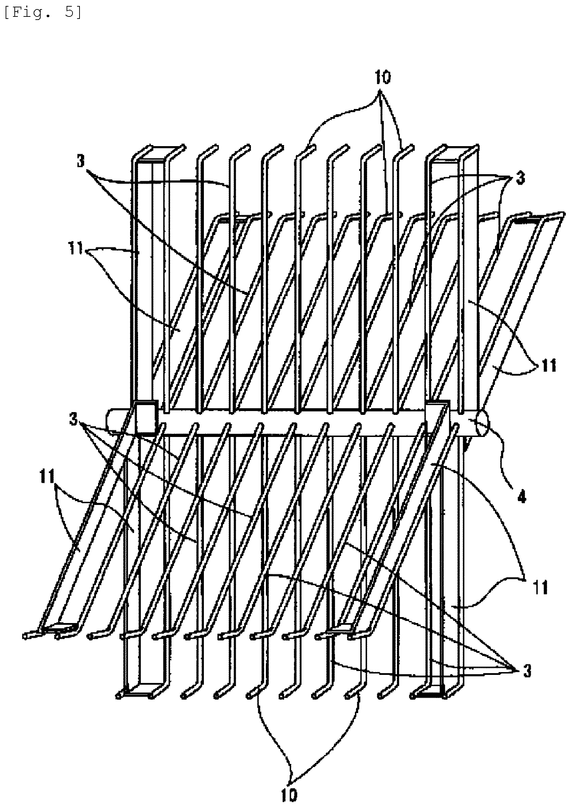

Fig. 5 shows the details of the collecting means 3 inside the nanofiber collector 9. On the rotating shaft 4 of the collecting means comprises 11 parallel collecting rods 3 arranged in the axial direction of the rotating shaft 4 of the collecting means. At the tip of each of the parallel collecting rods 3, a bent and extended dropout prevention portion 10 is formed.

The parallel collecting rods 3, which are the nanofiber collecting means comprise 11 rods in this embodiment, are installed in four directions around the circumference of the rotating shaft 4 of the collecting means, as shown in Figs. 4 and 5.

As shown in Fig. 5, a U-shaped predetermined shape-holding member 11 is attached to each of the 11 parallel collecting rods 3, one at each of the left and right ends. The predetermined shape-holding member 11 and the aforementioned dropout prevention portion 10 prevent the nanofiber aggregate F collected by the parallel collecting rod 3 from sticking out of the parallel collecting rod 3 or dropping out due to centrifugal force caused by rotation.

As shown in Fig. 4, both ends of the U-shaped scraping rod 12 are fixed to the rotating shaft 5 of the scraping means. There are 11 parallel collecting rods 3 on the rotating shaft 4 of the collecting means, and the spacing between the parallel rods is 10 spaces. But since both ends are fixed with U-shaped predetermined shape-holding members 11, the space for the U-shaped scraping rod 12 to rotate is 8 spaces. In order to scrape off the nanofiber aggregates F accumulated and collected by the collection method 3, it is not necessary to have U-shaped scraping rods 12 in all 8 spaces, and there is no problem even if there are less than 8.

When the rotating axis 5 of the scraping means is rotated 360° by the rotation control means, the scraping rod 12 passes through the gap between the parallel collecting rods 3 and peels off the nanofiber aggregates F collected and accumulated on the 11 parallel collecting rods 3. In addition, a collection container 13 is disposed below the nanofiber aggregates F that are peeled off from the parallel collecting rods, and the nanofiber aggregates F that are peeled off from the parallel collecting rods are automatically collected in the collection container 13 by their own weight.

In this example, when the parallel collecting rods 3 are placed at the front, back, top, and bottom of the outer circumference of the rotating shaft 4 of the collecting means, the rotation control means stops the rotation drive of the rotating shaft 4 of the collecting means (state shown in Fig. 4). The nanofiber flow 40 is discharged from the discharge nozzle of the nanofiber discharging device 2 only to the parallel collecting rod 3 located below the rotating shaft 4 of the collecting means. When the parallel collecting rod 3 is rotated 90° from there and placed horizontally, the rotating shaft 5 of the scraping means is rotated 360. Then, the scraping rod 12 strips off the nanofiber aggregate F collected on the parallel collecting rod 3. The stripped nanofiber aggregates are automatically collected in the collection container 13.

Next, the air blow discharge port 17, which is an embodiment of the present invention, and the air blow discharge port assembly device 170, which suppresses the stretching action of the nanofiber fibers during the generation and stretching of the nanofiber flow 40 discharged from the nanofiber discharge device 2, and at the same time disrupts the nanofiber flow 40 to three-dimensionally entangle the nanofiber fibers, are described in detail based on Figs. 2-4. The air blow discharge port assembly device 170 in this example should be installed between the nanofiber discharge device 2 and the collection device 9, but it can be installed incidentally to the nanofiber discharge device 2 or independently.

The multiple air blow discharge ports 17 in the air blow discharge port assembly device 170 are arranged in a way that surrounds the nanofiber flow 40 (not shown in this figure) in order to apply high-pressure air from the surrounding area to the nanofiber flow discharged from the nanofiber discharge device 2, thereby adding disturbance to the nanofiber flow, suppressing the stretching action of the nanofiber fibers being generated and stretched, and at the same time disrupting the nanofiber flow in a three-dimensional manner and make the fibers intertwine with each other in a complex manner (not shown in this figure). In this example, the air blow discharge port 17 is arranged in a circular shape around the nanofiber flow 40 (not shown in this figure), but it does not necessarily have to be in a circular shape as long as it surrounds the nanofiber flow.

The angle of the air blow discharge port 17 can be freely adjusted with respect to the axis direction of the high-temperature, high-pressure gas port by the angle adjustment plate 18. The angle adjustment plate 18 is attached to a hollow disc-shaped holding frame 19 that can be slid in the radial direction (toward or away from the discharge flow of the nanofiber flow). Piping etc. is required to supply high-pressure air to the air blow discharge port 17, but for the sake of simplicity, piping etc. is not shown in the figure. In addition to the piping, a pump and a solenoid valve to turn on/off the high-pressure air supply are provided, but this can also be based on a suitable configuration, and a detailed explanation is omitted herein. In the present invention, air blowing control means 50 for controlling various air blowing operations as well as the discharge time of each air blowing port 17 and air blowing volume change means 51 for electrically adjusting the air blowing volume of the air nozzle 17 are provided.

A hollow disk-shaped holding frame 19 with a plurality of air blow discharge ports 17 mounted circumferentially is located downstream of the nanofiber discharge port 2 and surrounding the nanofiber flow 40 discharged from the port 2. It is integrally configured to the nanofiber discharge device 2 via a connecting frame not shown in this figure. As shown in FIGS. 2 to 4, eight air blow discharge ports 17 composed of a plurality of air blow discharge ports 17 are arranged concentrically at equal intervals (45° intervals) around the arrangement of the nanofiber discharge ports 2. However, of course, the plural air blow discharge ports 17 do not have to be concentric circles and are not limited to eight at 45° intervals.

Each air blow discharge port 17 is attached to the holding frame 19 via an angle adjustment plate 18. The angle adjustment plate 18 has a structure that can slide in the radial direction on the hollow disk-shaped holding frame 19 in the direction of approaching or moving away from the nanofiber flow, and is also equipped with a means of changing the air blow angle to adjust the air blow direction angle from the air blow discharge port 17 relative to the axis direction of the high-temperature, high-pressure gas port.

Although this figure does not refer to the method for adjusting the radial sliding mechanism and the air blow angle adjustment method on the holding frame 19 of the angle adjustment plate 18, it goes without saying that it can be done manually or automatically using a control device.

The method for producing nanofiber aggregates uses a method for producing nanofiber aggregates by generating and stretching nanofiber flow 40 discharged from a nanofiber discharge device 2 and collecting them in the collector. In this method, high-pressure air is discharged from the air blow discharge port 17 to the nanofiber flow 40 being generated and stretched from the nanofiber discharge device 2 to suppress the stretching action of the nanofiber fibers being generated and stretched. At the same time, the nanofiber flow 40 is stirred three-dimensionally to accelerate the three-dimensional entanglement of the nanofiber fibers to produce the nanofiber aggregates. By controlling the direction of the high-pressure air from the air blow discharge port 17, it is possible not only to accelerate the three-dimensional entanglement between the nanofiber fibers, but also to change the direction of nanofiber accumulation to obtain the desired shape of the nanofiber accumulation.

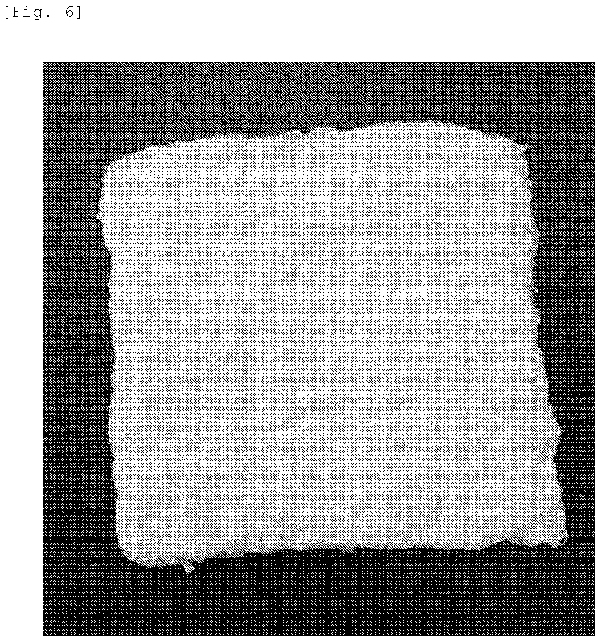

Fig. 6 shows a photograph of a square sheet of nanofiber aggregates produced using the production apparatus of the present invention. As can be seen in this figure, the nanofibers are accumulated the entire square surface in the mean, and not concentrated in the center as in the case of the aggregates produced by the conventional production method shown in Fig. 15, indicating that they do not need to be formed into a sheet in a subsequent process.

In the case of an air blow discharge port assembly device 170 assembled with multiple air blow discharge ports 17, the air blow operation for each individual air blow discharge port 17 or block or the entire air blow discharge port 17 is controlled in clockwise or counterclockwise order continuously or randomly. The airflow control in this case can be either on/off control of the airflow at each air blow discharge port 17 or control of the airflow volume. In this way, by controlling the airflow from multiple air blow discharge ports 17, the stretching action of the nanofiber fibers being generated and stretched is suppressed, and at the same time, the nanofiber flow 40 is three-dimensionally agitated to accelerate the three-dimensional entanglement between the nanofiber fibers. In addition, the entire nanofiber flow 40 can be stirred in three dimensions and turned so that it is trapped from the surroundings, and the nanofiber flow can be formed into the desired shape. This enables the production of nanofiber aggregates in the desired shape.

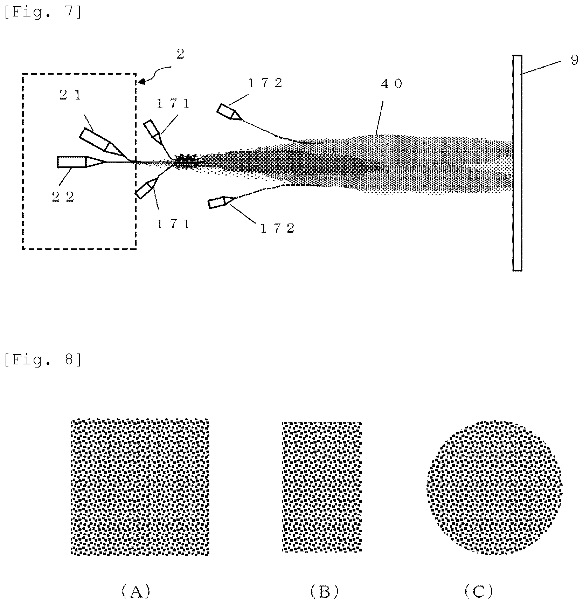

Fig. 7 shows a conceptual diagram of another example of the apparatus for producing the nanofiber of the present invention, which shows that the apparatus comprises two sets of air blow discharge port assembly devices 171 and 172 surrounding the nanofiber flow 40 between the nanofiber discharge device 2 and the nanofiber accumulation and collection device 9. In this way, the nanofiber flow can be divided into the roles of three-dimensional agitation and accumulation molding, and the nanofiber accumulation shape can be controlled more freely.

According to the apparatus producing the nanofiber aggregates of the embodiment described above, the nanofiber aggregate F to be collected in the nanofiber collecting means can be freely collected in the shape of square, rectangle, round, etc., as shown in Fig. 8, by appropriately adjusting the discharge of high-pressure air from the plurality of air blow discharge ports 17 to the nanofiber discharge flow 40. It can be formed into a sheet, mat, or block shape. In addition, the nanofiber aggregate F can be uniformly accumulated on the blowing surface of the parallel collecting rod 3, regardless of the amount of aggregate.

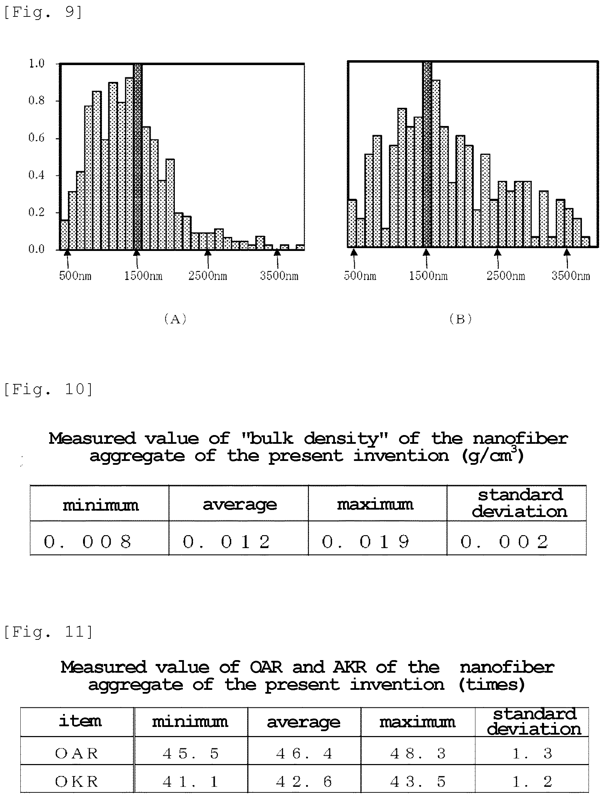

Fig. 9 shows the fiber diameter distribution data of a nanofiber aggregate with a central fiber diameter of 1500 nm produced by apparatus for producing the nanofiber aggregate of the embodiment of the present invention shown in Fig. 4, examined by scanning electron microscopy (SEM). For the measurement of the fiber diameter, the nanofiber aggregate produced by the production apparatus of the present invention was cut into test pieces of approximately 10 mm × 5 mm square. Scanning electron microscopy (SEM) was used to measure the distribution of fiber diameter at 300 different locations in the specimen, which were then summed and averaged.

Fig. 9(A) shows the distribution of fiber diameters of the nanofiber aggregates produced by stopping the discharge of high-pressure air of the air blow discharge port 17 using the apparatus of the embodiment of the present invention for comparison. Fig. 9(B) shows the distribution of fiber diameters of the nanofiber aggregates produced by discharging high-pressure air of the air blow discharge port 17 as an example of the present invention, contrasting the difference in fiber diameter distribution in Fig. 9(A). In both Fig. 9(A) and Fig. 9(B), the width of the horizontal axis of one bar represents the 120 nm band. The vertical axis represents the number of fibers within the 120 nm band (1440-1560 nm) normalized to 1.0 in 1500 nm as the central fiber diameter (the most frequently generated fiber diameter). The vertical axis represents a ratio of the number of the other fibers (not the number of fibers, but the frequency of occurrence of the fiber diameter) in each of 120nm bandwidths.

As can be seen from the contrast between Fig. 9(A) and Fig. 9(B), compared to the nanofiber aggregate produced without discharging high-pressure air from the air blow discharge port 17, the nanofiber aggregate produced by discharging high-pressure air from the air blow discharge port 17 has a wider distribution band of fiber diameters, and in particular, a larger amount of fibers with a diameter thicker than the central fiber diameter. This comparative data suggests that the high-pressure air discharged from the air blow discharge port 17 widens the distribution band of the nanofiber fiber diameter and increases the diameter of the thick fiber more. This can be considered as an effect obtained from the action of the high-pressure air discharged from the air blow discharge port 17 suppressing the stretching of the nanofiber fibers that are generated and stretched after being discharged from the nanofiber discharge device 2. In other words, the secondary air disturbance that suppresses the diameter reduction during the process of diameter reduction by stretching prevents the diameter reduction by stretching, and it is a natural result that the production of nanofibers with thicker fiber diameter increases. The increase in the number of thicker fibers means that the aggregate becomes thicker in a sense, and the increase in the space between the nanofiber fibers leads to an increase in the amount of oil adsorbed by the aggregate nanofiber aggregate, thus increasing the oil adsorption capacity of the nanofiber aggregate.

In the nanofiber aggregate of the present invention, the amount of fibers with a diameter larger than the diameter of the central fiber increases, and the thicker fibers intertwine with each other in a complex three-dimensional manner. Therefore, the space between the nanofiber fibers increases. This increase in the space between the nanofiber fibers means that there is more space to absorb oil, which increases the oil absorption capacity. At the same time, since the diameter of the thicker fibers has increased, the ability to retain the absorbed oil is also expected to improve. In other words, the nanofiber aggregate produced by the apparatus for producing the nanofibers of the present invention will result in improved oil absorption capacity and oil keeping capacity after oil absorption.

The nanofiber aggregate of the present invention is characterized by the fact that the amount of fibers with a diameter thicker than the central fiber diameter is equal to or larger than the amount of fibers with a diameter thinner than the central fiber diameter, and that the voids between the nanofiber fibers are increased due to the three-dimensional intertwining of the fibers. However, it is not practical to measure the fiber diameter distribution using a scanning electron microscope (SEM) or to measure the porosity due to the increased space between nanofiber fibers as a control index in the production line. In the present invention, "bulk density" is used as a performance control index instead of the control index. "Bulk density" is the weight divided by volume, and the porosity related to the fiber diameter distribution and the degree of entanglement between fibers is inversely proportional to this "bulk density". Therefore, low "bulk density" indicates that the porosity is high, so it can be said that it is a rational control index representing the nanofiber aggregate of the present invention.

"The bulk density is defined as the weight m (g) of the nanofiber aggregate divided by the volume V (cm³), as described above, but the measurement method must be defined. In this invention, "bulk density" is defined by the following measurement method.

The measurement of "bulk density" (symbol p) is performed on a sheet of nanofiber aggregate of a given size as follows. Since commercially available oil adsorbents are generally in the form of 30 cm or 50 cm square sheets, the following methods were used:
(i) cut the sheet-like nanofiber aggregate into 9 square pieces of 3×3,
(ii) stack the nine pieces in (i) above in a square base shaped transparent case with a side length of 1 cm plus 1 cm,
(iii) measure the net weight W (unit: g) of the 9 pieces of nanofiber aggregates,
(iv) measure the height H (unit: cm) of the pile in (ii),
(v) one piece of nanofiber area S (unit: cm²)
(vi) bulk density ρ = W / (SH) (unit g / cm³)

Fig. 10 shows a table of the measurement results of the "bulk density" of the nanofiber aggregates of the present invention. The minimum, mean, maximum and standard deviation are shown as the results of measurements of 89 prototypes of the nanofiber aggregates of the invention with a central fiber diameter of 1500 nm in the form of a 30 cm square sheet shown in Fig. 7, using different producing dates and times and multiple producing equipment.

Considering Fig. 10, it can be seen that the nanofiber aggregate of the present invention with a central fiber diameter of 1500 nm has an extremely stable low "bulk density" with a mean value of 0.012 (g/mm³) and a standard deviation of 0.002 (g/mm³). This indicates that the method for producing the nanofiber aggregate and the apparatus for producing the nanofiber aggregate of the present invention can produce nanofiber aggregates with a low "bulk density" of 0.020 or less in an extremely stable manner.

Fig. 11 shows the measured data of the oil adsorption capacity (OAR) and oil keeping capacity (OKR) of the nanofiber aggregate of the present invention with a central fiber diameter of 1500 nm shown in Fig. 10. It can be seen that the oil adsorption capacity (OAR) and oil keeping capacity (OKR) of the inventive nanofiber aggregate are superior by more than 40 times and much higher than those of commercial products.

As described in detail above, the method and apparatus for producing nanofiber aggregates of the present invention are comprises a secondary air blow discharge port between the nanofiber discharge device and the collector, and high-pressure air is discharged from the air blow discharge port to the nanofiber flow discharged from the nanofiber discharge device. Therefore, it can suppress the stretching action of the nanofibers being generated and stretched, and stably accumulates and collects the nanofiber aggregates with low bulk density. It is also characterized by the fact that the temperature, air volume, wind force, and discharge angle of the high-pressure air can be automatically adjusted by a control device on an individual or group basis to achieve shaped accumulation and collection. The nanofiber aggregate is characterized by its high oil adsorption capacity and oil keeping capacity due to its low "bulk density" with a larger diameter fiber content than the central fiber diameter.

In this document, in order to focusing on the oil adsorption ability of the nanofiber aggregate of the present invention, an example of oil adsorbent was explained in the specification. But the application of the nanofiber aggregate of the present invention is not limited to oil adsorbent. The nanofiber aggregate of the present invention is characterized by a wide distribution of fine to thick fibers around the center of the average fiber diameter, with a wide range of fibers that are thicker than the average fiber diameter, and an increase in the space between the nanofiber fibers due to the three-dimensional intertwining of the nanofiber fibers. Although not explained in detail in the specification, the low "bulk density" and high porosity also mean excellent sound absorption and heat insulation performance, and it goes without saying that the material is suitable for use in sound absorbing and soundproofing materials, heat insulating and heat retaining materials, and other widely known applications of ultra-fine diameter fibers.

### Reference List

- 2: nanofiber discharge device
- 3: parallel collecting rod (nanofiber collecting means)
- 4: rotating shaft of collection means
- 5: rotating shaft of scraping means
- 9: nanofiber collector
- 10: dropout prevention portion
- 11: predetermined shape-holding member
- 12: scraping rod
- 13: collection container
- 17: air blow discharge port
- 18: deflection angle adjustment plate (air blow angle changing means of the air discharge port)
- 19: holding frame
- 21: raw material solution discharge port
- 210: raw material solution
- 22: high-temperature, high-pressure gas discharge port
- 220: high-temperature, high-pressure gas
- 40: nanofiber flow discharged from the nanofiber discharge device
- 50: air blow controlling means
- 51: air blowing volume change means (control means)
- 170: air blow discharge port assembly device
- F: nanofiber aggregate

## Claims

1. A method for producing a nanofiber aggregate comprising:
generating and stretching a raw material solution with a nanofiber discharge device to obtain nanofibers,
wherein the nanofiber discharge device comprises;
a solution discharge port to discharge the raw material solution, and
a high-temperature, high-pressure gas discharge port to discharge high-temperature, high-pressure gas, and
wherein the discharge high-temperature, high-pressure gas discharged from discharge high-temperature, high-pressure gas port is blown to the raw material discharged from the solution discharge port, and
collecting the nanofibers by a collector,
the method comprising:
discharging secondary high-pressure air from an air blow discharge port to a generated and stretched nanofiber discharge flow discharged from the nanofiber discharge device to obtain the nanofibers,
wherein the air blow discharge port to additionally discharge high-pressure gas is located between the nanofiber discharge device and the collector, and
accumulating and collecting the nanofibers by the collector.

2. The method for producing a nanofiber aggregate according to claim 1 comprising:
discharging the secondary high-pressure air to the generated and stretched nanofiber discharge flow discharged from the nanofiber discharge device so as to increase the generation of nanofibers with a diameter larger than the central fiber diameter by generating turbulence in the nanofiber discharge flow,
three-dimensionally stirring the nanofiber fibers at the same time, and
accumulating and collecting the obtained nanofibers in the collector.

3. An apparatus for producing a nanofiber aggregate comprising:
a nanofiber discharge device having a solution discharge port to discharge a raw material solution and a high-temperature, high-pressure gas discharge port to discharge high-temperature, high-pressure gas, and
a collector to collect nanofibers obtained by generating and stretching the raw material solution discharged from the solution discharge port by the high-temperature, high-pressure gas discharged from the high-temperature, high-pressure gas port,
wherein the apparatus comprises an air blow discharge port to additionally discharge high-pressure gas between the nanofiber discharge device and the collector,
wherein the nanofibers are obtained by discharging secondary high-pressure air from the air blow discharge port to a generated and stretched nanofiber discharge flow being discharged from the nanofiber discharge device, and
wherein the obtained nanofibers are accumulated and collected in the collector.

4. The apparatus for producing the nanofiber aggregate according to claim 3,
wherein the secondary high-pressure air is discharged to the generated and stretched nanofiber discharge flow discharged from the nanofiber discharge device so as to increase the generation of nanofibers with a diameter larger than the central fiber diameter by generating turbulence in the nanofiber discharge flow,
wherein the nanofibers are three-dimensionally stirred at the same time, and
wherein the obtained nanofibers are accumulated and collected in the collector.

5. A nanofiber aggregate having the following elements:
(1) the central fiber diameter d is 1000 ≤ d ≤ 2500 (unit: nm),
(2) "Bulk density" ρ is ρ ≤ 0.020 (unit: g/cm³),
(3) oil adsorption capacity, OAR, is OAR ≥ 40 (unit: times),
(4) oil adsorption and keeping capacity, OKR, is OKR ≥ 40 (unit: times), and
(5) the amount of fiber distribution with a diameter larger than the central fiber diameter d of the nanofiber aggregate is larger than the amount of fiber distribution with a diameter smaller than the central fiber diameter d.
